# EUROPEAN PATENT APPLICATION

(11) **EP 4 597 252 A1**
(43) Date of publication of application: **06.08.2025**
(21) Application number: 24223556.2
(22) Date of filing: 27.12.2024
(51) Int. Cl.: G05D 7/06, A61H 9/00

(54) **PULSED PRESSURE CONTROL SYSTEM (METHOD)**

(30) Priority: 05.02.2024 US 202463549653 P; 06.02.2024 US 202463550150 P
(71) Applicant: Koge Micro Tech Co., Ltd., New Taipei City 235 (TW)
(72) Inventor: CHANG, Chih, 235 New Taipei City (TW); LIAO, Po-Yuan, 235 New Taipei City (TW); WU, Yuan-Guang, 235 New Taipei City (TW); CHUNG, Chi-Tsan, 235 New Taipei City (TW)
(74) Representative: Cabinet Chaillot

(57) **Abstract**

A pulsed pressure control system includes a supply unit, a switching unit, a first path, a second path, a fluid receiving device, and a return path. The first path and the return path are different paths connected between the supply unit and the switching unit. The second path is connected between the switching unit and the fluid receiving device. During pressurization, the switching unit cuts off communication between the first and second paths to increase the volume of, and eventually pressurize, the fluid on the first path, and then the switching unit is switched on to allow communication between the first and second paths to instantaneously release the pressurized fluid to the fluid receiving device through the second path. During pressure release, the switching unit allows communication between the second and return paths to allow the fluid to flow back to the supply unit through the return path.

## Description

### BACKGROUND OF THE INVENTION

### 1. Technical Field

The present invention relates to a pulsed pressure control system and more particularly to a pulsed pressure control system that uses a fluid control method to regulate a corresponding receiving device such as at least one air bag, air pocket, or other inflatable device.

### 2. Description of Related Art

A common massage device generally uses a motor to drive one or more rollers to apply pressure of different magnitudes. Such massage devices require complicated motors and gears and a variety of rollers that are different in shape. Hard rollers, however, are substantially incapable of producing a gentle kneading effect.

Besides, existing devices that feature pressure regulation such as car seats, massage chairs, and hospital/nursing care beds only allow their air bags to be slowly adjusted to a fixed state, meaning the air bags do not have a massage function.

Therefore, it has been an important issue in the related technical fields to incorporate fluid into various massage products through hardware (structural) and software improvements, in order for the fluid to provide pulsed up-and-down movements and thereby enhance the pulsed massaging effects of such products.

### SUMMARY OF THE INVENTION

The technical problem to be solved by the present invention is to provide a pulsed pressure control system that overcomes the drawbacks of the prior art by using a fluid to cause an instantaneous increase in volume of a fluid receiving device, thereby enabling a pulsing effect with different up-and- down movements.

To solve the foregoing technical problem, one of the technical solutions adopted by the present invention is to provide a pulsed pressure control system that includes a supply unit, a switching unit, a first path, a second path, a fluid receiving device, and a return path. The supply unit outputs a fluid according to a pulsed control signal specifying a preset pressure and flow rate. The switching unit is in the form of a switch, and the switching unit is located between the first path and the second path. The first path is connected between the supply unit and the switching unit. The second path is connected between the switching unit and the fluid receiving device so that the fluid receiving device can receive, through the switching unit, the fluid output by the supply unit. The return path is another path connected between the switching unit and the supply unit. When the supply unit is turned on after the switching unit cuts off communication between the first path and the second path, the fluid will be supplied to the first path to increase the volume of, and eventually pressurize, the fluid on the first path. When the switching unit is subsequently switched on to allow communication between the first path and the second path, the pressurized fluid will be instantaneously released to the fluid receiving device through the second path such that the interior volume of the fluid receiving device is changed. To release the pressure in the fluid receiving device, the switching unit brings the second path into communication with the return path such that the fluid in the fluid receiving device is delivered back to the supply unit through the second path and the return path.

One of the advantageous effects of the present invention is that the pulsed pressure control system of the invention allows the gas output by the supply unit to be supplied to the first path to increase the volume of, and eventually pressurize, the gas on the first path; that when the switching unit is subsequently switched on, the pressurized gas will be instantaneously released through the second path to the fluid receiving device to effect an instantaneous change in the interior volume of the fluid receiving device, thereby producing a massage-like striking/pressing effect; and that in order to release the pressure in the fluid receiving device, the switching unit brings the second path and the return path into communication with each other such that the fluid in the fluid receiving device is delivered back to the supply unit through the return path. Thus, the fluid receiving device can be inflated and deflated repeatedly as the fluid is circulated, or more particularly as the fluid undergoes pressurization and depressurization in a circulating manner.

### BRIEF DESCRIPTION OF THE DRAWINGS

The structure and technical means adopted by the present invention to achieve the above and other objectives can be best understood by referring to the following detailed description of some preferred embodiments and the accompanying drawings, wherein:
Fig. 1A is a schematic drawing of the pulsed pressure control system according to the first embodiment of the invention;
Fig. 1B is a schematic drawing of Fig. 1A further comprising a return path;
Fig. 2A is a pressure regulating space in communication with a switching unit;
Fig. 2B is Fig. 2A further comprising a return path;
Fig. 2C is a pressure regulating space in communication with a supply unit;
Fig. 2D is a pressure regulating space in communication with the first path;
Fig. 2E is a fluid receiving device further having the first outlet;
Fig. 2F is a switching unit further having the second outlet;
Fig. 3A is a schematic drawing of the pulsed pressure control system according to the third embodiment of the invention;
Fig. 3B is Fig. 3A further comprising a return path; and
Fig. 4 is a plot showing some pulse curves according to which the supply unit of the invention can be controlled.

### DETAILED DESCRIPTION OF THE INVENTION

### [First embodiment]

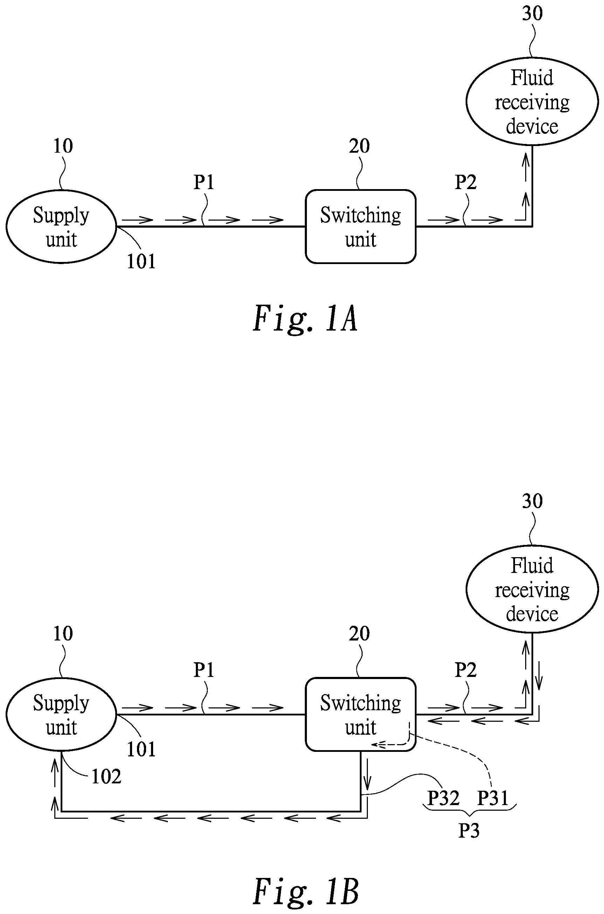

Referring to Fig.1A and Fig.1B. the present invention provides a pulsed pressure control system that includes a supply unit 10, a switching unit 20, a first path P1, a second path P2, and a fluid receiving device 30. The pulsed pressure control system can further comprises a return path P3. The supply unit 10 outputs a fluid according to a pulsed control signal that specifies a preset pressure and a preset flow rate. The switching unit 20 is in the form of a switch, and the switching unit 20 is located between the first path P1 and the second path P2. The first path P1 is connected between the supply unit 10 and the switching unit 20. The second path P2 is connected between the switching unit 20 and the fluid receiving device 30. The return path P3 is another path connected between the switching unit 20 and the supply unit 10.

More specifically, the supply unit 10 in this embodiment may be a pump serving mainly to supply the fluid. The pump has an output end 101 and an input end 102. The input end 102 is connected to a gas or liquid supply, such as an atmospheric environment or a fluid container (not shown). The output end 101 is connected to the first path P1.

The first path P1, the second path P2, and the return path P3 are defined by tube-based communication devices, such as hollow tubes. The hollow tube defining the first path P1 is connected between the supply unit 10 and the switching unit 20, the hollow tube defining the second path P2 is connected between the switching unit 20 and the fluid receiving device 30, and the hollow tube defining the return path P3 is connected between the switching unit 20 and the supply unit 10 and defines a different path from the first path P1.

More specifically, the hollow tube-defined return path P3 can be divided into a first return path P31 and a second return path P32, with the complete return path P3 going from the fluid receiving device 30 to the switching unit 20 (the first return path P31) and then from the switching unit 20 to the supply unit 10 (the second return path P32). During the pressurization stage, the fluid on the first path P1 is increased in volume, is eventually pressurized, and is then released to the fluid receiving device 30 through the second path P2 instantaneously. During the pressure release stage, the fluid in the fluid receiving device 30 is delivered to the switching unit 20 and then back to the supply unit 10 through the first return path P31 and the second return path P32.

The switching unit 20 is in the form of a switch but is not necessarily so. The switching unit 20 is connected between the first path P1 and the second path P2 in order to allow or cut off communication between the first path P1 and the second path P2. The switching unit 20 is also connected between the second path P2 and the return path P3 in order to allow or cut off communication between the second path P2 and the return path P3. The switching unit 20 in this embodiment may be a solenoid valve or an electromagnet so as to be switched on or off through electrical control. Alternatively, the switching unit 20 may be a distribution valve controlled by a motor in order for the motor to control whether or not to allow passage of the fluid and the flow direction. The switching unit 20 may also be a piezoelectric valve to enable more precise micro-control.

The fluid receiving device 30 is connected to one end of the second path P2. Through the switching unit 20, the fluid receiving device 30 can receive the fluid output by the supply unit 10. The fluid receiving device 30 may be an air bag, an air pocket, or other inflatable devices that can be expanded and collapsed, i.e., whose volume can be increased and decreased.

The return path P3 is designed for recycling the fluid during the pressure release stage. In this embodiment, the return path P3 is divided into the first return path P31 and the second return path P32. The input end 102 of the supply unit 10 is connected to the second return path P32 while the output end 101 of the supply unit 10 is connected to the first path P1. More specifically, the second return path P32 connects the switching unit 20 to the supply unit 10. The switching unit 20 provides a bypass channel for use as the first return path P31. When the switching unit 20 is switched off and stops supplying the fluid to the fluid receiving device 30, the first return path P31 can work as part of the return path P3 so that when the fluid receiving device 30 releases the pressure therein, the fluid in the fluid receiving device 30 can flow to the supply unit 10 through the second path P2, the switching unit 20, and the second return path P32.

After the gas output by the supply unit 10 is supplied to the first path P1 and thereby increases the volume of, and eventually pressurizes, the fluid on the first path P1, the switching unit 20 is switched on to allow instantaneous release of the pressurized gas to the fluid receiving device 30 through the second path P2. The interior volume of the fluid receiving device 30 will be immediately changed as a result, producing a massage-like pressing/kneading effect. The pressurized gas in the fluid receiving device 30 can be subsequently delivered back to the supply unit 10 through the return path P3, or more particularly the first return path P31 and the second return path P32. Thus, the fluid receiving device 30 can be repeatedly expanded and collapsed as the fluid is circulated through pulsed pressure control system.

The pressure of the first path P1, of the second path P2, and of the return path P3 varies in a circulating manner as follows. For the sake of simplicity, the pressure of each path is designated below by the same reference numeral as the path. During the pressurization stage, the tube pressure of the first path P1 is greater than that of the second path P2 (i.e., P1 > P2) while pressurization takes place along the first path 1, and once the switching unit 20 allows communication between the first path P1 and the second path P2, the fluid on the first path P1 is pushed to the second path P2 by the tube pressure of the first path P1 such that the fluid receiving device 30 is filled with the fluid coming along the second path P2. During the pressure release stage, the tube pressure of the second path P2 is greater than that of the return path P3 (i.e., P2 > P3) to begin with, and once the switching unit 20 allows communication between the second path P2 and the return path P3, the fluid on the second path P2 is pushed to the return path P3 by the tube pressure of the second path P2 such that the fluid is circulated back to the supply unit 10. The cyclic pressure changes occurring along the foregoing pulsed pressure path cause repeated expansion and collapse of the fluid receiving device 30 (e.g., an air bag or air pocket).

The pulsed pressure control system of the present invention can make the fluid receiving device 30 expand and collapse instantaneously (i.e., within an extremely short time) in a circulating manner. For example, there may be 10 expansion-collapse circulations within 1 second or 50 such circulations within 10 seconds. The repetition of instantaneous expansion and collapse produces a pulsed massaging effect that can be felt by the system user. The pulsed pressure control system of the invention can be used, for instance, as a massage system in the chairs or seats of a means of transport.

### [Second embodiment]

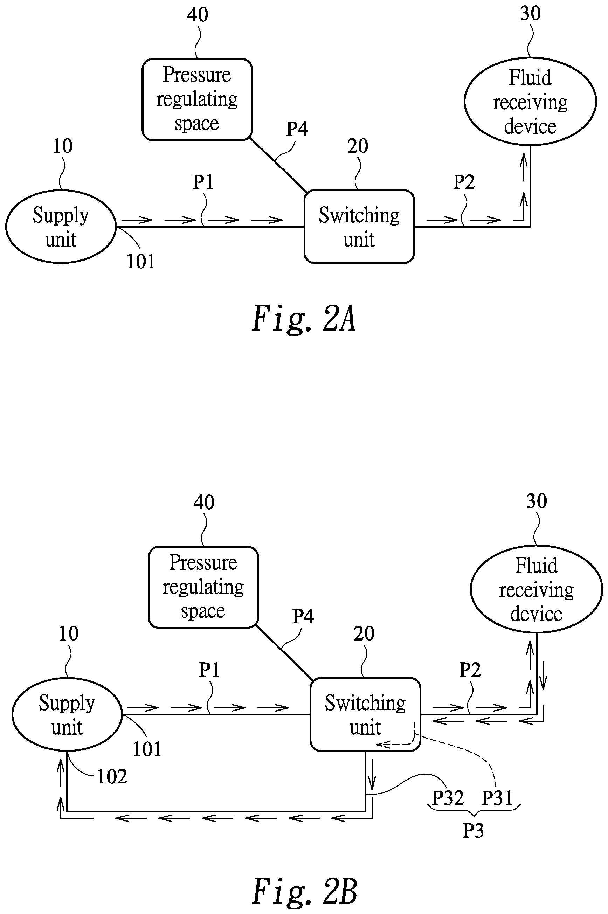

Referring to Fig. 2A to Fig.2F, the pulsed pressure control system in the second embodiment is different from its counterpart in the first embodiment in that it further includes a pressure regulating space 40 for providing additional pressurization. The pressure regulating space 40 in this embodiment is shown in Fig. 2A and Fig.2B as in communication with the switching unit 20 so that once the fluid in the pressure regulating space 40 is increased in volume and eventually pressurized, the pressurized fluid in the pressure regulating space 40 can be delivered to the switching unit 20. When the switching unit 20 is subsequently switched on, the pressurized fluid that has been delivered from the pressure regulating space 40 to the switching unit 20 will be delivered to the fluid receiving device 30 through the second path P2 to increase the volume of, i.e., to expand, the fluid receiving device 30 immediately. Thus, the pressure regulating space 40 provides additional pressure regulation to produce the effect of increasing the force applied during a massage.

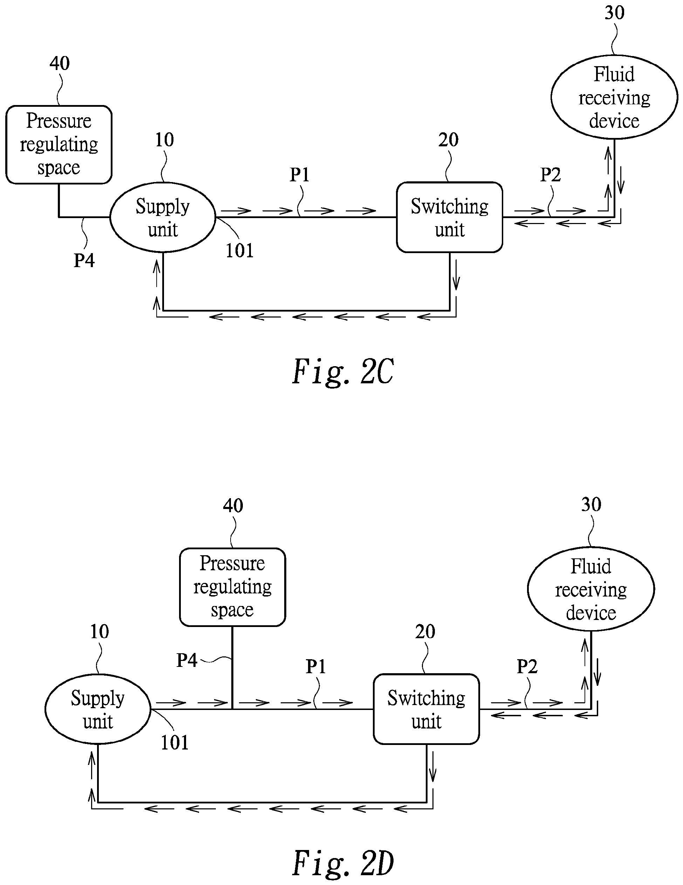

Referring to Fig. 2C and Fig. 2D, the pressure regulating space 40 may be in communication with the supply unit 10 or the first path P1 instead of the switching unit 20. When the pressure regulating space 40 is directly in communication with the supply unit 10, the pressurized fluid in the pressure regulating space 40 is delivered to the switching unit 20 through the first path P1, and when the switching unit 20 is switched on, the pressurized fluid that has been delivered from the pressure regulating space 40 to the switching unit 20 will be delivered to the fluid receiving device 30 through the second path P2, thus also producing the effect of increasing the massaging force during a massage.

When the pressure regulating space 40 is in communication with the first path P1, the pressurized fluid in the pressure regulating space 40 is delivered to the switching unit 20 through the first path P1, and when the switching unit 20 is switched on, the pressurized fluid that has been delivered from the pressure regulating space 40 to the switching unit 20 will be delivered to the fluid receiving device 30 through the second path P2, thus also producing the effect of increasing the massaging force during a massage. Therefore, regardless of whether it is in communication with the supply unit 10, the first path P1, or the switching unit 20, the pressure regulating space 40 of the present invention is equally capable of producing the effect of increasing the massaging force during a massage. No more drawings are needed for further explanation in this regard.

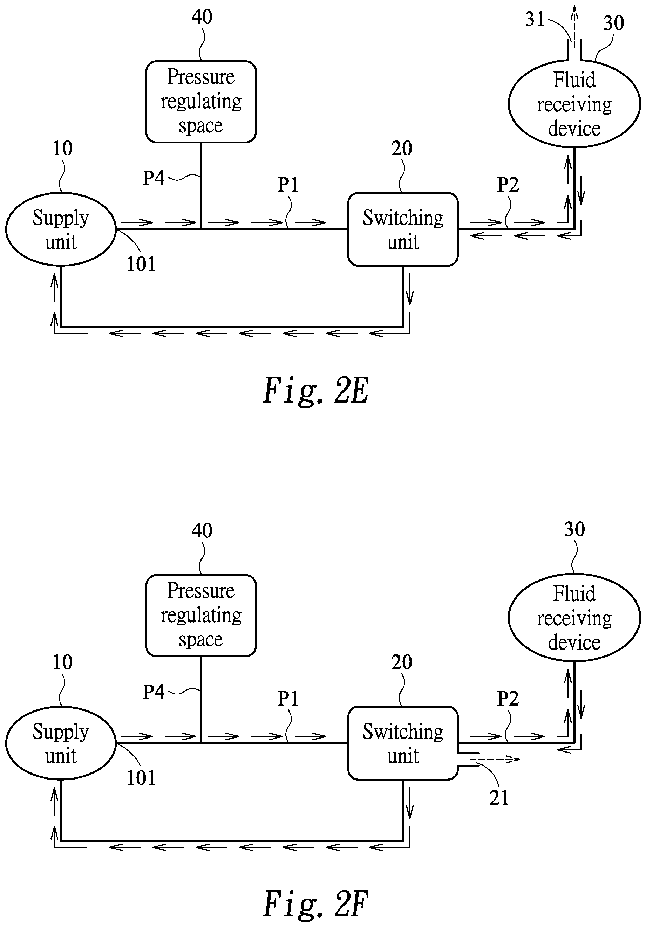

Referring to Fig. 2E, the fluid receiving device 30 is further configured to have a first outlet 31, and the first outlet 31 is connected to the atmosphere, so as to release the fluid volume into the atmosphere through the first outlet 31. Therefore, the volume of the fluid receiving device 30 can be shrunk to produce a massage process like an effect of force release.

Referring to Fig. 2F, the switching unit 20 is further provided with a second outlet 21 that is connected to the atmosphere, so as to release the fluid volume into the atmosphere through the second outlet 21. Therefore, the volume of the fluid receiving device 30 can be shrunk to produce an effect of relaxation of force during a massage process.

### [Third embodiment]

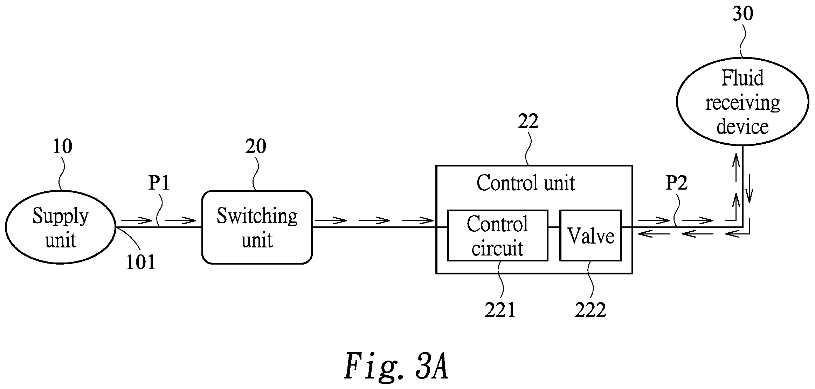

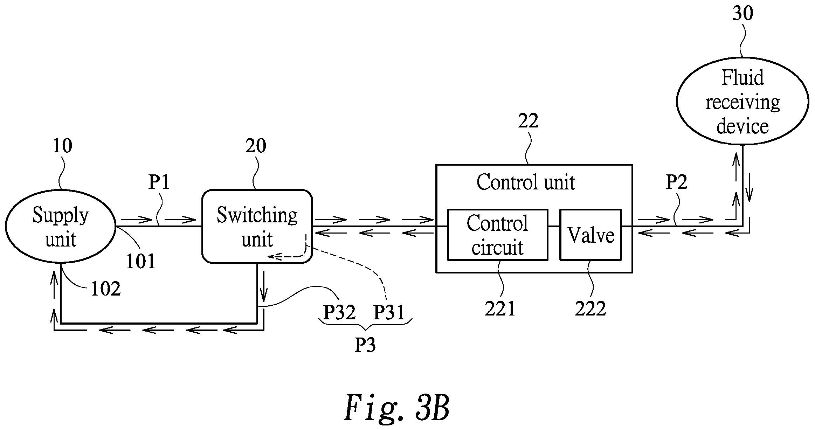

Referring to Fig. 3A and 3B , the pulsed pressure control system in this embodiment further includes a control unit 22, and the control unit 22 is provided between the switching unit 20 and the fluid receiving device 30. More specifically, the control unit 22 is a controller configured as an electronic control unit (ECU), which can be used in a vehicle. The control unit 22 includes at least one control circuit 221 and at least one valve 222. The valve 222 in this embodiment may be any valve product that has a switching function. The control circuit 221 may be a microcontroller unit (MCU). More specifically, the control circuit 221 may be implemented by integrating a central processing unit (CPU), a memory, an input/output interface, and a timer/counter into a semiconductor circuit board. The control circuit 221 may be configured to control a plurality of valves 222 each having a switching function and each controlling at least one fluid receiving device 30 such as an air bag in a vehicle. Therefore, at least one control interface may be provided to facilitate user input/output, allowing the air bag position, operation time, massaging force, and so on of the pulsed pressure control system (or module) in this embodiment (e.g., the massage equipment in a car seat) to be independently controlled.

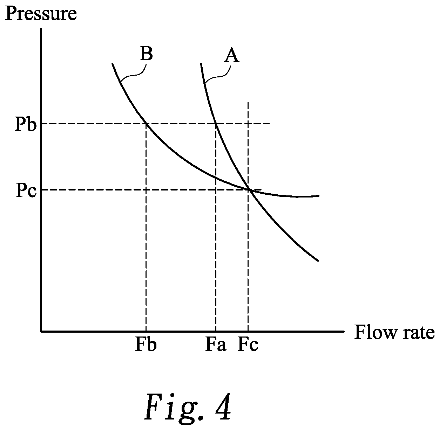

Based on the pulsed pressure control system described above, the present invention further provides a pulsed pressure control method that includes the steps of: providing to the supply unit 10 a pulsed control signal that specifies a preset pressure and a preset flow rate; and outputting a fluid by the supply unit 10 according to the preset pressure and the preset flow rate specified in the pulsed control signal. More specifically, referring to Fig. 4, the preset pressure and the preset flow rate in the pulsed control signal are control values generated according to a pulse curve representing the relationship between real-time pressure and the corresponding volume. Such pulse curves may include a plurality of preset curves such as curve A and curve B. Curves A and B may have different predetermined flow rates Fa and Fb that correspond to the same pressure Pb, meaning different preset flow rates may be provided to the supply unit 10 to instruct the supply unit 10 to supply different volumes of fluid to the fluid receiving device 30, thereby causing instantaneous expansion of the fluid receiving device 30 to different volumes, which in turn produce different massaging effects. Curves A and B may also have the same predetermined flow rate Fc at the same pressure Pc. The pulse curves may be provided in the control circuit 221, or more particularly stored in a memory, so that by way of a man-machine interface, a user may select from different pulse curves, which correspond to different massage modes.

According to the above, the pulsed pressure control system of the present invention is such that after the supply unit outputs gas to the first path to increase the volume of, and eventually pressurize, the gas on the first path, the switching unit can be switched on to instantaneously release the pressurized gas to the fluid receiving device through the second path, causing an instantaneous change in the interior volume of the fluid receiving device and thereby producing a massage-like striking/pressing effect; and that the pressure in the fluid receiving device can be subsequently released by the switching unit allowing communication between the second path and the return path in order for the fluid to flow back to the supply unit through the return path. Thus, pressurization of the fluid (which leads to inflation of the fluid receiving device) and pressure release from the fluid receiving device (which causes deflation of the fluid receiving device) can be carried out repeatedly as the fluid is circulated.

### [Advantageous effects of the embodiments]

The pulsed pressure control system of the present invention can make the fluid receiving device 30 expand and collapse instantaneously (i.e., within an extremely short time) in a circulating manner. For example, there may be 10 expansion-collapse circulations within 1 second or 50 such circulations within 10 seconds. The repetition of instantaneous expansion and collapse produces a pulsed massaging effect that can be felt by a user of the pulsed pressure control system. The circulation design of the pulsed pressure control system enables the system to work in a circulating manner, causing the fluid receiving device 30 to expand and collapse as the fluid is circulated.

The above description is only the preferred embodiments of the present invention, and is not intended to limit the present invention in any form. Although the invention has been disclosed as above in the preferred embodiments, they are not intended to limit the invention. A person skilled in the relevant art will recognize that equivalent embodiment modified and varied as equivalent changes disclosed above can be used without parting from the scope of the technical solution of the present invention. All the simple modification, equivalent changes and modifications of the above embodiments according to the material contents of the invention shall be within the scope of the technical solution of the present invention.

## Claims

1. A pulsed pressure control system, comprising:
a supply unit for outputting a fluid according to a pulsed control signal specifying a preset pressure and a preset flow rate;
a switching unit in a form of a switch;
a first path connected between the supply unit and the switching unit;
a second path having an end connected to the switching unit;
a fluid receiving device connected to an opposite end of the second path, the switching unit being located between the first path and the second path, wherein the fluid receiving device is configured to receive, through the switching unit, the fluid output by the supply unit;
wherein after the switching unit is used to cut off communication between the first path and the second path, turning on the supply unit allows the fluid to be supplied to the first path, increases a volume of the fluid on the first path, and eventually pressurizes the fluid on the first path.

2. The pulsed pressure control system as claimed in claim 1, further comprising a return path connecting the switching unit to the supply unit, when the switching unit is subsequently switched on to allow the communication between the first path and the second path, the pressurized fluid is instantaneously released to the fluid receiving device through the second path such that an interior volume of the fluid receiving device is changed.

3. The pulsed pressure control system as claimed in claim 1 or 2, wherein the supply unit is a pump, and the fluid receiving device is an air bag or an air pocket.

4. The pulsed pressure control system as claimed in claim 1 or 2, wherein the switching unit is a solenoid valve, an electromagnet, a motor-controlled distribution valve, or a piezoelectric valve.

5. The pulsed pressure control system as claimed in claim 1 or 2, further comprising a control unit, wherein the control unit is provided between the switching unit and the fluid receiving device.

6. The pulsed pressure control system as claimed in claim 5, wherein the control unit is a controller configured as an electronic control unit (ECU), and the control unit comprises at least one control circuit and at least one valve having a switching function.

7. The pulsed pressure control system as claimed in claim 1 or 2, further comprising a pressure regulating space in communication with the switching unit, wherein the pressure regulating space allows the fluid therein to be delivered to the switching unit when the fluid in the pressure regulating space is pressurized after being increased in volume, and the pressurized fluid delivered to the switching unit is further delivered to the fluid receiving device through the second path when the switching unit is switched on.

8. The pulsed pressure control system as claimed in claim 1 or 2, further comprising a pressure regulating space in communication with the supply unit or the first path, wherein the pressure regulating space allows the fluid therein to be delivered to the switching unit through the first path when the fluid in the pressure regulating space is pressurized after being increased in volume, and the pressurized fluid delivered to the switching unit is further delivered to the fluid receiving device through the second path when the switching unit is switched on.

9. The pulsed pressure control system as claimed in claim 1 or 2, wherein the supply unit has an output end and an input end, the output end is connected to the first path, and the input end is connected to a gas or liquid supply.

10. The pulsed pressure control system as claimed in claim 1, wherein the first path and the second path are defined by tube-based communication devices.

11. The pulsed pressure control system as claimed in claim 2, wherein the first path, the second path, and the return path are defined by tube-based communication devices.

12. The pulsed pressure control system as claimed in claim 1, wherein the first path has a tube pressure greater than a tube pressure of the second path during a pressurization stage.

13. The pulsed pressure control system as claimed in claim 2, wherein the first path has a tube pressure greater than a tube pressure of the second path during a pressurization stage, and the tube pressure of the second path is greater than a tube pressure of the return path during a pressure release stage.

14. A pulsed pressure control method, applied to a pulsed pressure control system comprising:
a supply unit for outputting a fluid according to a pulsed control signal specifying a preset pressure and a preset flow rate;
a switching unit;
a first path connected between the supply unit and the switching unit;
a second path having an end connected to the switching unit;
a fluid receiving device connected to an opposite end of the second path, the switching unit being located between the first path and the second path, wherein the fluid receiving device is configured to receive, through the switching unit, the fluid output by the supply unit;
the pulsed pressure control method comprising the steps of:
cutting off communication between the first path and the second path, by the switching unit;
turning on the supply unit in order for the fluid to be supplied to the first path, thereby increasing a volume of the fluid on the first path and eventually pressurizing the fluid on the first path;
switching on the switching unit to allow the communication between the first path and the second path, in order for the pressurized fluid to be instantaneously released to the fluid receiving device through the second path to change an interior volume of the fluid receiving device; and
releasing a pressure in the fluid receiving device by allowing the fluid in the fluid receiving device to flow to the supply unit through the second path and the switching unit.

15. The pulsed pressure control method as claimed in claim 14, further comprising a return path connecting the switching unit to the supply unit; the pulsed pressure control method further comprising the steps of: allowing communication between the second path and the return path, by the switching unit; and releasing a pressure in the fluid receiving device by allowing the fluid in the fluid receiving device to flow to the supply unit through the second path, the switching unit, and the return path.
